(19) **Europäisches Patentamt**

**European Patent Office**

**Office européen des brevets**

(11) **EP 1 188 556 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(51) Int Cl.$^7$: **B32B 27/36**, C08J 5/18, G11B 5/64, G11B 5/84, B29C 55/14, B29C 55/06, B29C 55/08, B29C 55/02, B29C 47/88

(21) Anmeldenummer: **01120758.6**

(22) Anmeldetag: **07.09.2001**

(54) **Mehrschichtige biaxial orientierte Polyesterfolie mit optimierter elektrischer Leitfähigkeit über die Dicke**

Multilayer biaxially oriented polyester film having optimized electrical conductivity over its thickness

Film polyester multicouches et biaxialement orienté possédant une conductivité électrique optimisée dans le sens de son épaisseur

(84) Benannte Vertragsstaaten:
**DE FR LU**

(30) Priorität: **15.09.2000 DE 10045604**

(43) Veröffentlichungstag der Anmeldung:
**20.03.2002 Patentblatt 2002/12**

(73) Patentinhaber: **Mitsubishi Polyester Film GmbH 65203 Wiesbaden (DE)**

(72) Erfinder:
 • **Müller, Harald, Dr.**
  **65232 Taunusstein (DE)**
 • **Murschall, Ursula, Dr.**
  **55283 Nierstein (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:
**EP-A- 0 502 208**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine mehrschichtige, biaxial orientierte Folie, die überwiegend aus einem kristallisierbaren, thermoplastischen Polyester aufgebaut ist. Die Folie zeichnet sich dadurch aus, dass sie wirtschaftlich bei hoher Oberflächenqualität und mit Geschwindigkeiten von mehr als 340 m/min hergestellt werden kann. Die Erfindung betrifft ferner ein Verfahren zur Herstellung der Folie sowie ihre Verwendung.

Bei der Herstellung von mehrschichtigen Folien mit Dicken zwischen 0,5 und 350 μm werden Kunststoffgranulate zunächst in Extrudern aufgeschmolzen und die extrudierte Kunststoffschmelze einer Mehrschicht-Breitschlitzdüse zugeleitet. Die aus der Breitschlitzdüse austretende Vorfolie wird an einer Abzugs- und Kühlwalze angelegt und nach dem Verlassen der Abzugswalze längs und quer zur Maschinenlaufrichtung gestreckt.

Zum Stabilisierten des Anlegens der Vorfolie an die Abzugswalze werden im Stand der Technik zusätzlich Kräfte auf die Vorfolie in dem Bereich zwischen dem Austritt der Vorfolie aus der Breitschlitzdüse und dem Anlegepunkt auf der Abzugswalze aufgebracht. Die aufgebrachten zusätzlichen Kräfte können durch Anblasen der Vorfolie mit einem Luftstrahl aus einem Luftmesser, durch Einsprühen von Wasser in den Zwickel der Vorfolie vor dem Anlegepunkt auf der Abzugswalze, durch Ausbildung eines Wasserfilms auf der Abzugswalze oder durch die Erzeugung eines elektrischen Feldes mittels einer auf Hochspannung liegenden Elektrode erzeugt werden, wobei die Feldlinien des elektrischen Feldes auf die Oberfläche der Abzugswalze gerichtet sind. Die zusätzlichen aufgebrachten Kräfte dienen dazu, die zwischen der Oberfläche der Abzugswalze und der Unterseite der Vorfolie, das ist die der Abzugswalze zugewandte Seite der Vorfolie, eingeschlossene Luft unter dem Zwickel der Vorfolie vor dem Anlegen der Vorfolie an die Abzugswalze hinauszudrängen, um so das Anlegen der Vorfolie an die Walzenoberfläche über einen vorgegebenen Umschlingungswinkel zu stabilisieren. Wenn dies nicht gelingt, entstehen mehr oder weniger große Lufteinschlüsse, sogenannte "Pinning"-Blasen, die sich zwischen der Unterseite der Vorfolie und der Oberfläche der Abzugswalze befinden und die Glätte und somit die Qualität der auf der Abzugswalze abgekühlten Vorfolie sowie der daraus später entstehenden biaxial gestreckten Folie verschlechtern.

Es ist bekannt, als Elektrode ein Metallband aus Edelstahl parallel zu der Abzugswalzenoberfläche anzuordnen, wobei das Metallband im Allgemeinen aus einer Metallfolie von etwa 20 μm Dicke in einer Breite von 10 mm ausgestanzt oder ausgeschnitten wird.

Aus dem deutschen Gebrauchsmuster G 9402027 ist eine Vorrichtung zur Herstellung von Folien, insbesondere Dünn- bzw. Dünnstfolien, bekannt, mit einer rotierenden Walze, mit der eine plastisch verformbare, vorzugsweise durch eine Breitschlitzdüse zugeführte Folie gefördert und gestreckt wird, wobei zwischen der Walze und einem Parallel in geringem Abstand zu der Walze angeordneten Metallband eine elektrische Spannung angelegt ist, durch die die zugeführte Folie an die Walze angelegt wird, bei der das Metallband eine scharfe Längskante aufweist, die der Walze nächstliegend angeordnet und auf diese gerichtet ist. Die scharfe Längskante ist nach Art einer Schneidkante an einem spitz zulaufenden Bereich des Metallbandes ausgebildet, wobei das Metallband nächstliegend in einem Abstand kleiner 6 mm zur Walze angeordnet ist. Die Mittellinie des spitz zulaufenden Bereichs ist auf dem Mittelpunkt der Walze fluchtend ausgerichtet. Der Einsatz einer derartigen Metallband-Elektrode verbessert die Folienqualität.

Mit zunehmender Endgeschwindigkeit, d.h. mit mehr als 340 m/min bei der Folienherstellung, nimmt die Ausbildung von "Pinning"-Blasen immer mehr zu. Durch Erhöhung der elektrischen Spannung der Elektrode kann dem zwar noch in Grenzen entgegengewirkt werden, bei zu hohen Spannungen ergibt sich aber das Problem von elektrischen Durchschlägen zwischen Elektrode und Kühlwalze. Im Bereich dieser Durchschläge wird in der Folie ein massiver Defekt, d. h. eine extreme Dünnstelle über die Folienbreite erzeugt. Die Folie reißt dadurch in der Maschine ab, was wirtschaftlich äußerst ungünstig ist. Das Verfahrensfenster für die Produktionssicherheit zwischen "Pinning"-Blasen und Durchschlägen mit Folienabrissen wird mit zunehmender Produktionsgeschwindigkeit immer enger.

EP-A-502208 beschreibt eine ein-oder mehrschichtige biaxial orientierte Folie, die aus einem thermoplastischen Polyester aufgebaut ist, mit einem spezifischen, elektrischen Schmelzewiderstand im Bereich von $5.10^6$ bis $5.10^9$ Ω.cm, und einer Dicke im Bereich von 1 bis 20 μm. Diese Folie wird im Bereich von magnetischen Aufzeichnungsmedien verwendet.

Aufgabe der vorliegenden Erfindung war es, eine mehrschichtige biaxial orientierte Polyesterfolie mit einer Dicke im Bereich von 1 bis 20 μm mit Geschwindigkeiten von größer/gleich 340 m/min herzustellen, wobei beim Herstellungsprozess ein ausreichend großes Verfahrensfenster für die Produktionssicherheit offengehalten werden soll.

Gelöst wird die Aufgabe durch eine Folie der eingangs genannten Art, deren Kennzeichenmerkmal darin zu sehen ist, dass die mehrschichtige Polyesterfolie einen über ihre Gesamtdicke gemittelten spezifischen, elektrischen Schmelzewiderstand im Bereich von $1{,}5 \cdot 10^7$ bis $30 \cdot 10^7$ Ω · cm, vorzugsweise zwischen $2 \cdot 10^7$ und $10 \cdot 10^7$ Ω · cm, insbesondere zwischen $3 \cdot 10^7$ und $6 \cdot 10^7$ Ω · cm aufweist.

Unter dem mittleren, spezifischen, elektrischen Widerstand über die Gesamtdicke [p] (rho) wird der mit den einzelnen Schichtdicken gewichtete arithmetische Mittelwert der spezifischen, elektrischen Widerstände der einzelnen Schichten verstanden.

Im Falle einer dreischichtigen ABC-Folie gilt beispielsweise

$$\rho = \rho_A \cdot \frac{d_A}{d_{ges}} + \rho_B \cdot \frac{d_B}{d_{ges}} \; \rho_C \cdot \frac{d_c}{d_{ges}}$$

$d_A, d_B, d_c$ :  Dicke der einzelnen Schichten

$d_{ges} = d_A + d_B + d_c$ :  Gesamtdicke

$\rho_A, \rho_B, \rho_C$:  spezifische, elektrische Widerstände der einzelnen Schichten

Bei Foliendicken zwischen 1 μm und 20 μm, die mit Endgeschwindigkeiten von ≥ 340 m/min hergestellt und elektrisch angelegt werden, treten bei Polyesterrohstoffen, die einen über die Dicke gemittelten spezifischen elektrischen Schmelzewiderstand von größer als $30 \cdot 10^7 \, \Omega \cdot cm$ aufweisen, dramatische "Pinning" -Blasen auf. Durch Heraufsetzen der Spannung werden die "Pinning"-Blasen zwar etwas reduziert, jedoch nicht beseitigt, da wiederum Durchschläge vermehrt auftreten.

Liegt dagegen der über die Dicke gemittelte spezifische elektrische Schmelzewiderstand unter $1{,}5 \cdot 10^7 \, \Omega \cdot$ cm treten bei den hohen Produktionsgeschwindigkeiten ebenfalls die beschriebenen Probleme auf.

Es war völlig überraschend, dass biaxial orientierte Polyesterfolien mit einer Dicke im Bereich von 1 μm bis 20 μm mit Endgeschwindigkeiten von ≥ 340 m/min frei von "Pinning"-Blasen und frei von Durchschlägen hergestellt werden konnten, wenn der über die gesamte Foliendicke gemittelte spezifische elektrische Schmelzewiderstand [ρ] im erfindungsgemäßen Bereich von $1{,}5 \cdot 10^7$ bis $30 \cdot 10^7 \, \Omega \cdot cm$ liegt.

Die hergestellten Folien können zwei-, drei- oder mehrschichtig sein. Sie können symmetrisch oder asymmetrisch aufgebaut sein, wobei verschieden rezepturierte beziehungsweise rezepturierte oder nicht rezepturierte Polyester oder solche gleicher chemischer Zusammensetzung, jedoch mit unterschiedlichem Molekulargewicht und verschiedener Viskosität, durch Koextrusion vereinigt werden können.

Die erfindungsgemäße Folie besteht im wesentlichen aus kristallisierbaren Polyethylenterephthalaten, aus kristallisierbaren Polyethylennaphthalaten (PEN) oder Mischungen daraus.

Unter kristallisierbaren Polyethylenterephthalaten oder kristallisierbaren Polyethylennaphthalaten werden

- kristallisierbare Homopolymere
- kristallisierbare Copolymere
- kristallisierbare Compounds
- kristallisierbares Rezyklat
- andere Variationen von kristallisierbaren Thermoplasten.

verstanden.

Die Herstellung der Polyester kann sowohl nach dem Umesterungsverfahren, z. B. mit Hilfe von Umesterungskatalysatoren wie z. B. Zn-, Mg-, Ca-, Mn-, Li- oder Ge-Salzen, wie auch nach dem Direktesterverfahren (PTA-Verfahren) erfolgen, bei dem Antimonverbindungen als Polykondensationskatalysatoren und Phosphorverbindungen als Stabilisatoren verwendet werden. Der IV-Wert (intrinsische Viskosität) der Polyester liegt vorzugsweise im Bereich von 0,5 bis 1,0 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybuthylenterephthalat, Poly-1,4-cyclohexylendimethylenterephthalat, Polyethylen-2,6naphthalindicarboxylat, Polyehtylennaphthalat/Bibenzoat oder Polyethylen-p-hydroxy-benzoat.

Die Polyester können bis zu 50 Mol-%, insbesondere bis zu 30 Mol-%, aus Comonomereinheiten aufgebaut sein, wobei eine Variation in der Glykol- und/oder der Säurekomponente möglich ist. Als Säurekomponente können die Copolyester u. a. 4,4-Bibenzoesäure, Adipinsäure, Glutarsäure, Bernsteinsäure, Sebazinsäure, Phtalsäure, Isophthalsäure, 5-Na-sulfoisophthalsäure oder polyfunktionelle Säuren wie Trimelithsäure u. a. enthalten.

Die Polyesterfolien können nach bekannten Verfahren aus einem Polyesterrohstoff mit ggf. weiteren Rohstoffen und/oder weiteren für Trägerfolien für magnetische Aufzeichnungen üblichen Additiven in üblichen Mengen von 0,1 bis maximal 20 Gew.-% sowohl als Monofolie als auch als mehrschichtige, ggf. coextrudierte Folien mit gleichen oder unterschiedlich ausgebildeten Oberflächen hergestellt werden, wobei eine Oberfläche beispielsweise pigmentiert sein kann und die andere Oberfläche kein oder weniger Pigment enthält. Ebenso können eine oder beide Oberflächen der Folie nach bekanntem Verfahren mit einer üblichen funktionalen Beschichtung versehen werden.

Bei dem bevorzugten Extrusionsverfahren zur Herstellung der Polyesterfolie wird die aufgeschmolzenen Polyesterschichten durch eine Breitschlitzdüse extrudiert (Koextrusion) und als weitgehend amorphe Vorfolie auf einer Kühlwalze mit polierter Oberfläche abgeschreckt. Diese Vorfolie wird anschließend erneut erhitzt und in Längsund Querrichtung bzw. in Quer- und Längsrichtung bzw. in Längs-, Quer- und nochmals in Längsrichtung und/oder Querrichtung gestreckt. Die Strecktemperaturen liegen im allgemeinen bei $T_g$ +10 K bis $T_g$ +60 K ($T_g$ = Glasübergangstemperatur). Das Streckverhältnis der Längsstreckung liegt zweckmäßig im Bereich von 2 bis 6, insbesondere von 3 bis 4,5, das der Querstreckung im Bereich von 2 bis 5, insbesondere von 3 bis 4,5 und das der ggf. durchgeführten zweiten Längsstreckung im Bereich von 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen im Bereich von 150 bis 250 °C, insbesondere von 170 bis 240 °C.

Die Geschwindigkeit der Folie bei Ankunft an der Vorrichtung zum Aufwickeln der Folie liegt bei größer/gleich 340 m/min.

Dadurch dass die hergestellte Folie mit hohen Endgeschwiridigkeiten ohne Durchschläge und frei von "Pinning"-Blasen hergestellt werden kann, ist die Produktion sehr wirtschaftlich. Aufgrund der hohen Folienqualität eignet sie sich für hochwertige Anwendungen, wie z.B. Trägerfolien für magnetische Aufzeichnungsmedien, hochwertige Verpackungsfolien, Kondensatorfolie, Folie für Metallisierungsanwendungen, um nur einige zu nennen.

Die Erfindung wird im Folgenden anhand von Ausführungsbeispielen näher erläutert, ohne jedoch auf die konkret dargestellte Ausführungsform beschränkt zu sein.

Die Messung der einzelnen Eigenschaften erfolgt gemäß der folgenden Normen bzw. Verfahren.

**Spezifischer elektrischer Schmelzewiderstand**

Der spezifische, elektrische Schmelzewiderstand wird nach der Methode von Brit. J. Appl. Phys. Volume 17, Seiten 1149 - 1154 (1966) bestimmt. Die Schmelzetemperatur (Messtemperatur) beträgt 285 °C und der Widerstand wird sofort nach Anlegen einer Spannung von 100 V abgelesen.

**Mittlere Dicke**

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte über die ganze Rollenbreite gehenden Musters genommen wird. Die Berechnung von $d_F$ erfolgt dann über die Beziehung:

$$d_F(\mu m) = \frac{m[g]}{l[mm]^* b[mm]^* d[g \, / \, cm^3]} * 10^6$$

wobei gilt:

m = Masse des untersuchten Folienstücks
l = Länge der Probe
b = Breite der Probe
d = Dichte des untersuchten Materials

d für Polyester bei Raumtemperatur = 1,395 g/cm³

Die einzelnen Probestreifen werden nach dem Zuschneiden auf einer Analysenwaage Mettler PM 200 (Höchstlast 200 g) verwogen. Ein daran angeschlossener Computer vom Typ HP Vectra ES/12 übernimmt nach Eingabe von Maschine, Rollennummer alle Parameter aus dem OPUS Programm und errechnet damit die mittlere Dicke.

**IV-Wert**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV \, (DCE) = 6{,}67 \cdot 10^{-4} \, SV \, (DCE) + 0{,}118$$

**Pinning-Blasen**

Zur Untersuchung der Folie auf Pinning-Blasen wird ein 10 cm breiter Folienstreifen über die Breite der Originalrolle vor einem schwarzen Hintergrund unter monochromatischem Licht einer Natriumdampflampe (Wellenlänge 590 nm) vorbeigeführt und betrachtet. Die auf der Folienoberfläche vorhandenen Pinning-Blasen werden mit einer 120fachen Vergrößerung per Videokamera auf einen Bildschirm übertragen und bewertet.

Eine Pinning-Blasen freie Folie zeigt eine homogene, unstrukturierte Oberfläche. Eine mit Pinning-Blasen behaftete Folie sieht leicht trüb aus und weist eine Oberfläche auf, die mit einer unzählbaren Anzahl kleinster Bläschen (Pünktchen) übersät ist. Die Anzahl der Bläschen bzw. Pünktchen liegt bei > 5000 pro 100 cm² Folie.

**Beispiel 1**

Mittels Koextrusions-Technologie wurde eine dreischichtige ABA-Folie hergestellt, wobei B die Basisschicht mit einer Dicke von 11 µm und A die jeweils 1 µm dicken Deckschichten repräsentieren, die beidseitig auf der Basisschicht B angeordnet waren.

Das Polyethylenterephthalat (PET) für die Basisschicht hatte einen SV-Wert von 810 und einen spezifischen, elektrischen Widerstand von $0,9 \cdot 10^7 \, \Omega \cdot$ cm (FL2CV, Fa. Toray/ Frankreich). Für die Deckschichten wurde der Polyester 4020 der Fa. KoSa/Deutschland verwendet, der über Masterbatch-Technologie mit 5000 ppm $CaCO_3$-Partikeln mit einem mittleren Teilchendurchmesser von 0,7 µm, gemessen nach der Siebmethode, ausgerüstet wurde und einen spezifischen elektrischen Widerstand von $32 \cdot 10^7 \, \Omega \cdot$ cm hatte. Die Endgeschwindigkeit der Produktion lag bei 400 m/min.

Die an die Elektrode angelegte Spannung betrug 5,8 kV. Das Längsstreckverhältnis betrug 4,6.

Der über die gesamte Dicke der Folie gemittelte, spezifische, elektrische Widerstand lag somit bei [ρ] = 5,7 $\cdot 10^7 \, \Omega \cdot$ cm. Es entstanden keine "Pinning"-Blasen und keine Durchschläge, die zu Folienabrissen führten. Die Laufsicherheit bei der hohen Produktionsgeschwindigkeit war gut.

**Vergleichsbeispiel 1**

Beispiel 1 wurde wiederholt. In Abänderung zu Beispiel 1 wurde der PET-Rohstoff FL2CV einem spezifischen, elektrischen Schmelzewiderstand von $0,9 \cdot 10^7 \, \Omega \cdot$ cm, auch in den Deckschichten eingesetzt. Bei einer Produktionsgeschwindigkeit von 350 m/min war es unter keiner Spannungseinstellung möglich, ohne "Pinning"-Blasen die Vorfolie an die Kühlwalze anzulegen oder ohne dass sich Durchschläge und damit Folienabrisse ereigneten. Der über die gesamte Dicke der Folie gemittelte, spezifische, elektrische Widerstand der Schmelze für die Folie nach dem Vergleichsbeispiel lag bei [ρ] = $0,9 \cdot 10^7 \, \Omega \cdot$ cm.

**Vergleichsbeispiel 2**

Beispiel 1 wurde wiederholt. In Abänderung zu Beispiel 1 wurde der PET-Rohstoff 4020 für die Basisschicht und für die beiden Deckschichten eingesetzt, der einen spezifischen, elektrischen Widerstand von $32 \cdot 10^7 \, \Omega \cdot$ cm, aufwies. Ab einer Produktionsgeschwindigkeit von 330 m/min war es unter keiner Spannungseinstellung mehr möglich ohne "Pinning"-Blasen anzulegen oder ohne dass sich Durchschläge und damit Folienabrisse ereigneten. Der über die gesamte Dicke der Folie gemittelte, spezifische, elektrische Widerstand der Schmelze für die Folie nach dem Vergleichsbeispiel 2 lag bei [ρ] = $32 \cdot 10^7 \, \Omega \cdot$ cm.

## Tabelle 1

| | IV-Wert Deckschichten und Basisschichten | Über die Dicke gemittelte spezifischer elektrischer Widerstand [ρ] $\Omega \cdot cm$ | Längsstreckverhältnis | Endgeschwindigkeit m/min | Angelegte Spannung kV | | Pinning-Blasen | Durchschläge | Laufsicherheit |
|---|---|---|---|---|---|---|---|---|---|
| Beispiel 1 | 0,66 dl/g | $5,7 \cdot 10^7$ | 4,6 | 400 | 5,8 | | frei | nein | gut |
| Vergleichs-Beispiel 1 | 0,66 dl/g | $0,9 \cdot 10^7$ | 4,6 | 400 | von 4 | bis 8 | keine Anlegung ohne Pinning-Blasen möglich | ja | schlecht |
| Vergleichs-Beispiel 2 | 0,66 dl/g | $32 \cdot 10^7$ | 4,6 | 400 | von 4 | bis 8 | keine Anlegung ohne Pinning-Blasen möglich | ja | schlecht |

EP 1 188 556 B1

**Patentansprüche**

1. Mehrschichtige, biaxial orientierte Folie, die mit Produktionsgeschwindigkeiten von größer/gleich 340 m/min herstellbar ist und die überwiegend aus einem thermoplastischen Polyester aufgebaut ist, **dadurch gekennzeichnet, dass** die mehrschichtige Polyesterfolie einen über ihre gesamte Dicke gemittelten, spezifischen elektrischen Schmelzewiderstand im Bereich von $1{,}5 \cdot 10^7$ bis $30 \cdot 10^7$ $\Omega \cdot$ cm aufweist.

2. Mehrschichtige Folie nach Anspruch 1, **dadurch gekennzeichnet, dass** sie einen über Ihre gesamte Dicke gemittelten, spezifischen elektrischen Schmelzewiderstand im Bereich von $2 \cdot 10^7$ bis $10 \cdot 10^7$ $\Omega \cdot$ cm aufweist.

3. Mehrschichtige Folie nach Anspruch 1, **dadurch gekennzeichnet, dass** sie einen über Ihre gesamte Dicke gemittelten, spezifischen elektrischen Schmelzewiderstand im Bereich von $3 \cdot 10^7$ bis $6 \cdot 10^7$ $\Omega \cdot$ cm aufweist.

4. Mehrschichtige Folie nach einem der Ansprüche 1 bis 3, **dadurch gekennzeichnet, dass** sie zwei-, drei- oder mehrschichtig ist und einen symmetrischen oder asymmetrischen Aufbau besitzt, wobei verschieden rezepturierte beziehungsweise rezepturierte oder nicht rezepturierte Polyester oder Polyester gleicher chemischer Zusammensetzung, aber mit unterschiedlichem Molekulargewicht und verschiedener Viskosität durch Koextrusion vereinigt sind.

5. Mehrschichtige Folie nach einem der Ansprüche 1 bis 4, **dadurch gekennzeichnet, dass** sie im wesentlichen aus kristallisierbarem Polyethylenterephthalat, aus kristallisierbarem Polyethylennaphthalat oder aus Mischungen daraus besteht.

6. Mehrschichtige Folie nach einem der Ansprüche 1 bis 5, **dadurch gekennzeichnet, dass** sie zusätzlich Antimonverbindungen als Polykondensationskatalysatoren und Phosphorverbindungen als Stabilisatoren enthält und dass der IV-Wert der Polyester im Bereich von 0,5 bis 1,0 dl/g liegt.

7. Verfahren zum Herstellen einer mehrschichtigen Folie nach einem der Ansprüche 1 bis 6, bei dem die aufgeschmolzenen Polyesterschichten durch eine Breitschlitzdüse extrudiert und als weitgehend amorphe Vorfolie auf einer Kühlwalze mit polierter Oberfläche angelegt und abgeschreckt werden, diese Vorfolie dann erneut erhitzt und in Längs- und Querrichtung gestreckt, thermofixiert und aufgewickelt wird, **dadurch gekennzeichnet, dass** zum Stabilisierten des Anlegens der Vorfolie an die Kühlwalze die Erzeugung eines elektrischen Feldes mittels einer an Hochspannung angeschlossenen Elektrode genutzt wird, wobei die Feldlinien des elektrischen Feldes auf die Oberfläche der Abzugswalze gerichtet sind und wobei der über die gesamte Foliendicke gemittelte, spezifische elektrische Schmelzewiderstand der Polyesterschichten im Bereich von $1{,}5 \cdot 10^7$ bis $30 \cdot 10^7$ $\Omega \cdot$ cm liegt und wobei die Strecktemperatur auf einen Wert im Bereich von $T_g$ +10 K bis $T_g$ +60 K eingestellt wird.

8. Verfahren nach Anspruch 7, **dadurch gekennzeichnet, dass** das Streckverhältnis der Längsstreckung auf einen Wert im Bereich von 2 bis 6, vorzugsweise von 3 bis 4,5, und das der Querstreckung im Bereich von 2 bis 5, insbesondere von 3 bis 4,5, eingestellt wird.

9. Verfahren nach Anspruch 7 oder 8, **dadurch gekennzeichnet, dass** die Thermofixierung der Folie bei Ofentemperaturen im Bereich von 150 bis 250 °C, insbesondere von 170 bis 240 °C, vorgenommen wird.

10. Verfahren nach einem der Ansprüche 7 bis 9, **dadurch gekennzeichnet, dass** die Geschwindigkeit der Folie bei Ankunft an der Vorrichtung zum Aufwickeln der Folie größer/gleich 340 m/min eingestellt wird.

11. Verwendung einer Folie nach einem der Ansprüche 1 bis 6 als Trägerfolie für magnetische Aufzeichnungsmedien, als hochwertige Verpackungsfolie, als Kondensatorfolie oder als Folie für Metallisierungsanwendungen.

**Claims**

1. A multilayer, biaxially oriented film which can be produced at production speeds greater than or equal to 340 m/min and which is mainly composed of a thermoplastic polyester, wherein the electrical resistivity of the melt, averaged over the entire thickness of the multilayer polyester film, is in the range from $1{.}5 \cdot 10^7$ to $30 \cdot 10^7$ $\Omega \cdot$ cm.

2. The multilayer film as claimed in claim 1, wherein the electrical resistivity of the melt, averaged over the entire thickness of the film, is in the range from $2 \cdot 10^7$ to $10 \cdot 10^7 \ \Omega \cdot cm$.

3. The multilayer film as claimed in claim 1, wherein the electrical resistivity of the melt, averaged over the entire thickness of the film, is in the range from $3 \cdot 10^7$ to $6 \cdot 10^7 \ \Omega \cdot cm$.

4. The multilayer film as claimed in any of claims 1 to 3, which has two, three, or more layers and has a symmetrical or asymmetrical structure, by using coextrusion to combine variously formulated, or formulated or straight, polyesters, or polyesters of identical chemical composition with different molecular weight and different viscosity.

5. The multilayer film as claimed in any of claims 1 to 4, which in essence consists of crystallizable polyethylene terephthalate, of crystallizable polyethylene naphthalate, or of a mixture thereof.

6. The multilayer film as claimed in any of claims 1 to 5, which also comprises antimony compounds as polycondensation catalysts and phosphorus compounds as stabilizers, wherein the IV value of the polyesters is in the range from 0.5 to 1.0 dl/g.

7. A process for producing a multilayer film as claimed in any of claims 1 to 6, in which the molten polyester layers are extruded through a slot die and laid, in the form of a substantially amorphous prefilm, on a chill roll with a polished surface and quenched, and this prefilm is then reheated and stretched longitudinally and transversely, heat-set, and wound up, which comprises, for the stabilization of the laying of the prefilm onto the chill roll, generating an electrical field by means of an electrode connected to high potential, the field lines of the electrical field having been directed onto the surface of the take-off roll, and the electrical resistivity of the melt of the polyester layers, averaged over the entire thickness of the film, being in the range from $1.5 \cdot 10^7$ to $30 \cdot 10^7 \ \Omega \cdot cm$, and the stretching temperature being adjusted to a value in the range from $T_g + 10 \ K$ to $T_g + 60 \ K$.

8. The process as claimed in claim 7, wherein the longitudinal stretching ratio is adjusted to a value in the range from 2 to 6, preferably from 3 to 4.5, and the transverse stretching ratio is adjusted in the range from 2 to 5, in particular from 3 to 4.5.

9. The process as claimed in claim 7 or 8, wherein the heat-setting of the film takes place at oven temperatures in the range from 150 to 250 °C, in particular from 170 to 240 °C.

10. The process as claimed in any of claims 7 to 9, wherein the speed of the film on arrival at the apparatus for the winding-up of the film is adjusted to be greater than or equal to 340 m/min.

11. The use of a film as claimed in any of claims 1 to 6 as a carrier film for magnetic recording media, as high-specification packing film, as capacitor film, or as film for metallizing applications.

**Revendications**

1. Film multicouche orienté biaxialement susceptible d'être fabriqué avec des vitesses de production supérieures ou égales à 340 m/min et composé majoritairement d'un polyester thermoplastique, **caractérisé en ce que** le film polyester multicouche présente une résistivité électrique en fusion moyennée sur la totalité de son épaisseur comprise entre $1,5 \cdot 10^7$ et $30 \cdot 10^7 \ \Omega \cdot cm$.

2. Film multicouche selon la revendication 1, **caractérisé en ce qu'**il présente une résistivité électrique en fusion moyennée sur la totalité de son épaisseur comprise entre $2 \cdot 10^7$ et $10 \cdot 10^7 \ \Omega \cdot cm$.

3. Film multicouche selon la revendication 1, **caractérisé en ce qu'**il présente une résistivité électrique en fusion moyennée sur la totalité de son épaisseur comprise entre $3 \cdot 10^7$ et $6 \cdot 10^7 \ \Omega \cdot cm$.

4. Film multicouche selon l'une des revendications 1 à 3, **caractérisé en ce qu'**il est bi-, tri- ou multicouche et possède une structure symétrique ou asymétrique, différents polyesters récepturés ou des polyesters récepturés et non récepturés ou des polyesters de même composition chimique, mais ayant un poids moléculaire et une viscosité différents, étant réunis par coextrusion.

5. Film multicouche selon l'une des revendications 1 à 4, **caractérisé en ce qu'**il est essentiellement composé de polyéthylènetéréphtalate cristallisable, de polyéthylènenaphtalate cristallisable ou de leurs mélanges.

6. Film multicouche selon l'une des revendication 1 à 5, **caractérisé en ce qu'**il contient en outre des composés d'antimoine à titre de catalyseurs de polycondensation et des composés de phosphore à titre de stabilisants et **en ce que** la viscosité intrinsèque des polyesters est comprise dans la plage de 0,5 à 1,0 dL/g.

7. Procédé de préparation d'un film multicouche selon l'une des revendications 1 à 6, dans lequel les couches de polyester en fusion sont extrudées à travers une buse à fente large et sont étirées comme pré-film principalement amorphe sur un rouleau de refroidissement à surface polie puis trempées, ce pré-film étant ensuite à nouveau réchauffé et étiré en direction longitudinale et transversale, thermofixé et embobiné, **caractérisé en ce que** l'on utilise la création d'un champ électrique au moyen d'une électrode reliée à une haute tension pour stabiliser le positionnement du pré-film sur le rouleau de refroidissement, les lignes de champ du champ électrique étant dirigées vers la surface du rouleau d'embobinage et la résistivité électrique en fusion des couches de polyester moyennées sur l'épaisseur totale du film étant comprise entre $1,5 \cdot 10^7$ et $30 \cdot 10^7$ $\Omega \cdot cm$, la température d'étirage étant réglée à une valeur comprise dans la plage $T_g$ +10K à $T_g$ +60K.

8. Procédé selon la revendication 7, **caractérisé en ce que** le ratio d'étirage longitudinal est réglé à une valeur de 2 à 6, de préférence de 3 à 4,5 et celui de l'étirage transversale à une valeur de 2 à 5, en particulier de 3 à 4,5.

9. Procédé selon la revendication 7 ou 8, **caractérisé en ce que** la thermofixation du film est réalisée à des températures du four allant de 150 à 250°C, en particulier de 170 à 240 °C.

10. Procédé selon l'une des revendications 7 à 9, **caractérisé en ce que** la vitesse du film à l'arrivée au dispositif d'embobinage de film est réglée à une valeur supérieure ou égale à 340 m/min.

11. Utilisation d'un film selon l'une des revendications 1 à 6 comme film support pour des milieux d'enregistrement magnétique, à titre de film d'emballage haut de gamme, à titre de film condensateur ou comme film pour des applications de métallisation.